# EUROPÄISCHE PATENTANMELDUNG

(11) **EP 3 088 788 A1**
(43) Veröffentlichungstag der Anmeldung: **02.11.2016**
(21) Anmeldenummer: 16166300.0
(22) Anmeldetag: 21.04.2016
(51) Int. Cl.: F16L 25/00, F16L 33/26

(54) **ANSCHLUSSVORRICHTUNG FÜR EINE FLUIDFÜHRENDE LEITUNG**

(30) Priorität: 30.04.2015 DE 102015106792
(71) Anmelder: Witzenmann GmbH, 75175 Pforzheim (DE)
(72) Erfinder: Bonanno, Daniel, 75245 Neulingen (DE); Paulig, Gerd, 75248 Ölbronn-Dürrn (DE)
(74) Vertreter: Lemcke, Brommer & Partner Patentanwälte Partnerschaft mbB

(57) **Zusammenfassung**

Vorgeschlagen wird eine Anschlussvorrichtung (1) für eine fluidführende Leitung mit einem ringgewellten Metallschlauch (5), umfassend: ein auf ein Ende des Metallschlauchs (5) aufsetzbares Anschlussstück (2); ein Schraubteil (11), welches eine Durchtrittsöffnung (11a) für den Metallschlauch (5) aufweist und mit dem Anschlussstück (2) verschraubbar ist, um wenigstens einen endständigen Wellenberg (8) des Metallschlauchs (5) gegen das Anschlussstück (2) dichtend zu verformen; und ein umlaufendes Dichtungselement (18), das zwischen dem Schraubteil (11) und dem Metallschlauch (5) angeordnet ist, welche Anschlussvorrichtung sich dadurch auszeichnet, dass durch das Verschrauben des Anschlussstücks (2) und des Schraubteils (11) auf das Dichtungselement (18) einwirkbar ist, sodass eine Verformung des Dichtungselements (18) in radialer Richtung hin zu dem oder gegen den Metallschlauch (5) bewirkbar ist. Auf diese Weise ergibt sich eine wirksame Abdichtung des Metallschlauchs (5) gegenüber externen, insbesondere korrosiven Schadeinflüssen ohne die nachträgliche Anbringung eines Tapes oder dergleichen.

## Beschreibung

Die Erfindung betrifft eine Anschlussvorrichtung nach dem Oberbegriff des Anspruchs 1 für eine fluidführende Leitung mit einem ringgewellten Metallschlauch mit einem auf ein Ende des Metallschlauchs aufsetzbaren Anschlussstück und einem Schraubteil, welches eine Durchtrittsöffnung für den Metallschlauch aufweist und mit dem Anschlussstück verschraubbar ist, um wenigstens einen endständigen Wellenberg des Metallschlauchs gegen das Anschlussstück dichtend zu verformen, und ein umlaufendes Dichtungselement, das zwischen dem Schraubteil und dem Metallschlauch angeordnet ist.

Weiterhin betrifft die Erfindung eine Anschlussverbindung mit einem ringgewellten Metallschlauch nach dem Oberbegriff des Anspruchs 12.

Außerdem betrifft die Erfindung ein Verfahren zum dichten Verbinden eines ringgewellten Metallschlauchs mit einer erfindungsgemäßen Anschlussvorrichtung gemäß Anspruch 15.

Es ist bekannt, einen ringgewellten Metallschlauch mit einer Anschlussvorrichtung zu versehen, um über die Anschlussvorrichtung einen dichten Anschluss des Metallschlauchs an ein weiteres Element bewirken zu können. Das Verbinden von Anschlussvorrichtung und Metallschlauch erfolgt beispielsweise so, wie in der EP 1 347 227 B1 beschrieben. Dort besteht die Anschlussvorrichtung im Wesentlichen aus einem Anschlussstück mit einem Außengewinde, einer auf den Metallschlauch aufschiebbaren und auf das Außengewinde des Anschlussstücks aufschraubbaren Überwurfmutter sowie einem in der Überwurfmutter gehaltenen Haltering für den Metallschlauch. Dabei besteht die Notwendigkeit, den Metallschlauch in den Bereichen, in denen er prinzipbedingt nicht von einer schützenden Ummantelung umgeben ist bzw. sein kann, vor äußerer Schadeinwirkung, insbesondere Korrosionseinflüssen, zu schützen.

Bei vorbekannten Lösungen, beispielsweise gemäß WO 2004/088087 A2 oder US 2015/0028584 A1, werden Dichtungselemente eingesetzt, um den nicht ummantelten Abschnitt eines Metallschlauch gegen die Umgebung abzudichten. Hierfür wurden bisher Dichtungselemente verwendet, die ohne radiale Anpressung an der Ummantelung des Metallschlauchs anliegen. Aufgrund von produktionsbedingten Toleranzen insbesondere in der Schichtdichte der Ummantelung sind derartige Dichtungselemente allein nicht in der Lage, eine hinreichend große Dichtwirkung zu erzielen.

Bei einer bekannten Bauform, der HYDRA GS Flexipipe aus dem Hause der Anmelderin, wird die Anschlussvorrichtung daher nach dem Befestigen des Metallschlauchs an einem Anschlussstück teilweise von außen mit einem Kunststoffband (Tape) umwickelt, um den Metallschlauch vor den schädlichen Einflüssen zu schützen. Als nachteilig erweist sich hierbei, dass das Anbringen des Kunststoffbands zeitaufwändig ist und die Dichtwirkung von der richtigen Anwendung durch eine Person abhängig ist. Hierdurch ergibt sich eine große Unsicherheit bezüglich des Grades der erzielten Dichtwirkung. Auch ist es bei bestimmten Montagebedingungen, beispielsweise in engen Umgebungen, unter Umständen nur schwer oder gar nicht möglich, das Kunststoffband an der Anschlussvorrichtung anzubringen.

Der Erfindung liegt die Aufgabe zugrunde, eine verbesserte Anschlussvorrichtung für einen ringgewellten Metallschlauch, eine hierauf basierende Anschlussverbindung sowie ein Verfahren zum dichten Verbinden eines ringgewellten Metallschlauchs mit einer geeignet ausgebildeten Anschlussvorrichtung anzugeben, sodass ein nachträgliches Umwickeln der Anschlussvorrichtung mit einem Kunststoffband überflüssig wird und eine gute Abdichtung auch bei produktionsbedingten Toleranzen im Bereich des Metallschlauchs und seiner Ummantelung gewährleistet ist.

Die Aufgabe wird gelöst durch eine Anschlussvorrichtung mit den Merkmalen des Anspruchs 1, durch eine Anschlussverbindung mit den Merkmalen des Anspruchs 12 sowie durch ein Verfahren mit den Merkmalen des Anspruchs 15. Vorteilhafte Weiterbildungen ergeben sich aus den jeweiligen abhängigen Ansprüchen.

Erfindungsgemäß wird bei einer Vorrichtung der eingangs beschriebenen Art die Aufgabe dadurch gelöst, dass durch das Verschrauben des Anschlussstücks und des Schraubteils auf das Dichtungselement einwirkbar ist, dass also über das genannte Verschrauben ein aktives Einwirken auf das Dichtungselement erreichbar ist, beispielsweise mittels einer entsprechenden mechanischen Krafteinwirkung, sodass bzw. wodurch eine Verformung des Dichtungselements in radialer Richtung hin zu dem oder gegen den Metallschlauch bewirkbar ist. Dadurch kommt es zu einer radialen Anpressung des Dichtungselements an die Ummantelung des Metallschlauchs oder den Metallschlauch selbst, wodurch sich produktionsbedingte Toleranzen insbesondere in der Schichtdichte der Ummantelung ausgleichen lassen, um eine hinreichend große Dichtwirkung zu erzielen. Auf das nachträgliche Anbringen eines Tapes kann somit verzichtet werden, was Zeit-, Kosten- und Montagevorteile mit sich bringt.

Die mit der Erfindung erzielten Vorteile liegen also insbesondere darin, dass eine dichtende Verbindung zwischen dem Dichtungselement und dem Metallschlauch bewirkbar ist, ohne dafür die Anschlussvorrichtung nachträglich mit einem Kunststoffband umwickeln zu müssen. Vielmehr läuft der Vorgang des Abdichtens gegen die Umgebung quasi automatisch ab, ohne dass an der aus dem Stand der Technik bekannten Art und Weise, den Metallschlauch mit der Anschlussvorrichtung zu verbinden, grundlegend etwas geändert werden müsste. Damit gestaltet sich der Vorgang des Abdichtens gegen die Umgebung zeitsparend und unabhängig von der Handhabung durch den Anwender. Eine mangelhafte Dichtwirkung der Anschlussvorrichtung wird damit nahezu ausgeschlossen.

Im Zuge einer Weiterbildung kann der Metallschlauch wenigstens in Teilbereichen mit einer Ummantelung versehen ist, vorzugsweise in Form einer Kunststoffschicht, wobei höchst vorzugsweise das Dichtungselement im Bereich der Ummantelung angeordnet oder anzuordnen ist. Eine Ummantelung, insbesondere aus Kunststoff, beispielsweise einem Elastomer, lässt sich im Gegensatz zu dem Metallschlauch durch eine radiale Anpressung des Dichtungselements leichter radial verformen, um das Bewirken einer dichtenden Verbindung zu begünstigen. Außerdem schützt und stabilisiert sie den Metallschlauch in an sich bekannter Weise.

Vorzugsweise ist das Dichtungselement als O-Ring oder als im Querschnitt vorzugsweise rechteckiger Dichtring oder aber als im Querschnitt etwa L- oder U-förmiger Dichtring ausgebildet, höchst vorzugsweise in einem Kunststoff, insbesondere bevorzugt aus einem Elastomer. Hierdurch wird die Dichtwirkung günstig beeinflusst. Bei Ausgestaltung des Dichtungselements als im Querschnitt etwa L- oder U-förmiger Dichtring kann dieser so angeordnet sein, dass sich wenigstens einer seiner freien Schenkel in den lichten Bereich der Durchtrittsöffnung für den Metallschlauch hinein erstreckt und dort dichtend mit dem Metallschlauch in Wechselwirkung treten kann.

In einer weiteren vorteilhaften Ausführungsform umgibt das Anschlussstück das Schraubteil nach dem Verschrauben wenigstens in Teilbereichen nach Art einer Überwurfmutter oder ist von diesem umgeben, so dass das Schraubteil einmal als Einschraubteil (mit Außengewinde) und einmal als Aufschraubteil (mit Innengewinde) ausgebildet ist. Das Anschlussstück ist entsprechend in Teilbereichen komplementär ausgebildet. Dadurch wird die Einsatzflexibilität der vorgeschlagenen Anschlussvorrichtung erhöht.

Bevorzugt ist zwischen dem Anschlussstück und dem Schraubteil auf der Innenseite der Anordnung noch ein zusätzliches Hülsenteil vorgesehen, welches Hülsenteil zum Einwirken auf das Dichtungselement beim Verschrauben von Anschlussstück und Schraubteil vorgesehen und ausgebildet ist. Durch Vorsehen eines solchen Hülsenteils ist es grundsätzlich möglich, bestehende Anschlussvorrichtungen kostengünstig umzurüsten, ohne eine vollständige und entsprechend aufwändige Neumodellierung der Bauteile durchführen zu müssen. Hierdurch ergeben sich große Kostenvorteile gegenüber einer kompletten Neuentwicklung der Anschlussvorrichtung.

In einer vorteilhaften Ausgestaltung des erfindungsgemäßen Gedankens ist beim Verschrauben durch das Schraubteil bzw. durch eine an dem Schraubteil vorgesehene Struktur (z.B. eine umlaufende Schulter) eine Kraft in axialer Richtung auf das Dichtungselement bewirkbar, vorzugsweise gegen das Hülsenteil. Dadurch kann auf einfache Art und Weise eine axiale Kraft auf das Dichtungselement ausgeübt werden, auf welche axiale Kraft das Dichtungselement mit einer radialen Verformung nach innen hin zu dem oder gegen den Metallschlauch reagiert und damit die zu erzielende dichtende Wirkverbindung mit dem Metallschlauch bzw. der Ummantelung bewirkt.

Im Zuge einer Weiterbildung kann das Hülsenteil an seinem dem Schraubteil zugewandten Ende eine von dem Ende in Richtung des Anschlussstücks radial nach innen zulaufende Schräge aufweisen (Konusform). Die schräge Ausgestaltung des Endes des Hülsenteils bewirkt beim Verschrauben ein fein "dosierbares" Ausweichen des Dichtungselements radial nach innen hin zu dem Metallschlauch bzw. der Ummantelung, ohne das Dichtungselement dabei übermäßig axial belasten zu müssen.

In einer alternativen Ausführungsform kann das Schraubteil im Bereich der Schulter eine entgegen der Richtung vom Anschlussstück zum Schraubteil hin radial nach innen zulaufende Schräge, d.h. wiederum eine Konusform aufweisen. Dadurch lässt sich die zuvor beschriebene Wirkung analog umsetzen. Ein Vorteil dieser Ausführungsform liegt darin, dass nicht zwingend ein Hülsenteil benötigt wird, sondern dass auch eine Variante mit einem einstückigen, durchgängigen Schraubteil möglich ist, welches selbst auf das Dichtungselement einwirkt. Hierdurch lassen sich die Anzahl an benötigten Teilen und der damit verbundene Aufwand reduzieren.

In einer weiteren vorteilhaften Ausführungsform umfasst das Schraubteil wenigstens noch ein weiteres Schraubteil, das mit dem Schraubteil verschraubbar ist, so dass dieses zweiteilig aufgebaut ist. Durch ein Verschrauben des Schraubteils und dem weiteren Schraubteil ist durch das weitere Schraubteil eine axiale Kraft auf das Dichtungselement bewirkbar. Es kann in diesem Zusammenhang vorgesehen sein, dass das Dichtungselement zwischen den beiden Schraubteilen angeordnet ist. Durch das zusätzliche Schraubteil kann das Maß der Einwirkung auf das Dichtungselement präziser dosiert werden, und das Dichtungselement kann vor übermäßiger (axialer) Belastung bewahrt werden.

Bevorzugt ist zwischen dem Schraubteil und dem weiteren Schraubteil ein Kraftübertragungselement angeordnet, vorzugsweise ein federelastisches Element, höchst vorzugsweise ein Federring, welches Kraftübertragungselement dazu ausgebildet und vorgesehen ist, beim Verschrauben von Schraubteil und weiterem Schraubteil eine gezielte Beeinflussung, insbesondere eine Verzögerung der Krafteinwirkung auf das Dichtungselement zu bewirken. Dabei ist zu beachten, dass die Kraft, welche zum Verformen des Endbereichs des Metallschlauchs aufgewandt werden muss, regelmäßig kleiner ist als diejenige Kraft, welche zum Verformen eines (geeignet ausgewählten) Kraftübertragungselements benötigt wird. Damit lässt sich einerseits eine mechanische Verzögerung der Krafteinwirkung auf das Dichtungselement erreichen, und andererseits kann dieses insbesondere durch die Rückhaltekraft des Kraftübertragungselements vor einer übermäßigen axialen Beanspruchung geschützt werden.

Im Zuge einer Weiterbildung kann zwischen dem Schraubteil und dem Anschlussstück ein weiteres umlaufendes Dichtungselement angeordnet sein, vorzugsweise ein O-Ring. Dadurch kann verhindert werden, dass über das Gewinde, über welches das Anschlussstück und das Schraubteil miteinander verbunden sind, schädliche Stoffe auf den Metallschlauch einwirken. Umgekehrt dichtet das Dichtungselement auch gegenüber einem möglichen Entweichen des Fluids aus dem Metallschlauch in die Umgebung ab.

Eine erfindungsgemäße Anschlussverbindung umfasst wenigstens eine erfindungsgemäße oder gemäß dem Vorstehenden weitergebildete Anschlussvorrichtung und einen mit der Anschlussvorrichtung verbundenen ringgewellten Metallschlauch, um ein einfaches Abdichten des Metallschlauchs gegen die Umgebung zu erreichen, ohne dass hierfür das nachträgliche Anbringen eines Tapes erforderlich wäre.

In einer bevorzugten Ausführungsform ist der Metallschlauch wenigstens in Teilbereichen mit einer Ummantelung versehen, vorzugsweise in Form einer Kunststoffschicht. Die Ummantelung des Metallschlauchs erleichtert die dichtende Verbindung zwischen dem Dichtungselement und dem Metallschlauch und schützt den Metallschlauch vor korrosiven Einflüssen.

Bevorzugt steht die Ummantelung in dichtender Wirkverbindung mit dem Dichtungselement. Die Verbindung zwischen dem Dichtungselement und der Ummantelung, die vorzugsweise beide in einem Kunststoff ausgebildet sind bzw. wenigstens einer Kunststoffschicht aufweisen, hat sich als besonders wirksam dichtend erwiesen. Außerdem kann es so zu keiner äußeren Schadeinwirkung auf den Metallschlauch selbst kommen.

Ein wieder anderer Aspekt der Erfindung betrifft ein Verfahren zum dichten Verbinden eines ringgewellten Metallschlauchs mit einer erfindungsgemäß ausgebildeten Anschlussvorrichtung. Das Verfahren beinhaltet den Schritt, dass auf ein Ende des Metallschlauchs das Anschlussstück aufgesetzt wird. Weiterhin wird der Metallschlauch durch die Durchtrittsöffnung in dem Schraubteil gesteckt. Des Weiteren erfolgt ein Verschrauben des Anschlussstücks und des Schraubteils, wobei eine Verformung wenigstens eines vorzugsweise endständigen Wellenberges des Metallschlauchs erfolgt. Schließlich erfolgt ein Einwirken auf das Dichtungselement, und das Dichtungselement wird in radialer Richtung in Anlage an den Metallschlauch oder eine Ummantelung desselben gebracht. Dadurch kann das Verfahren zum dichten Anbinden eines ringgewellten Metallschlauchs um den Schritt des Umwickelns der Anschlussvorrichtung mit einem Kunststoffband (Tape) verkürzt werden kann. Dabei kann zudem die Qualität der dichtenden Verbindung erhöht werden.

Weitere Vorteile und Eigenschaften der Erfindung ergeben sich aus der folgenden Beschreibung von Ausführungsbeispielen anhand der Zeichnung.
Fig. 1 zeigt eine Komplettansicht einer Anschlussvorrichtung gemäß einer ersten Ausgestaltung im Längsschnitt;
Fig.2 zeigt eine Teilansicht der Anschlussvorrichtung gemäß Figur 1 vor der Verschraubung von Schraubteil und Anschlussstück im Längsschnitt;
Fig.3 zeigt die Teilansicht der Anschlussvorrichtung gemäß Figur 2 nach der Verschraubung von Schraubteil und Anschlussstück;
Fig.4 zeigt eine Teilansicht einer Anschlussvorrichtung vor der Verschraubung von Schraubteil und Anschlussstück gemäß einer ersten Variante im Längsschnitt;
Fig.5 zeigt die Teilansicht der Anschlussvorrichtung gemäß Figur 4 nach der Verschraubung von Schraubteil und Anschlussstück;
Fig.6 zeigt eine Teilansicht einer Anschlussvorrichtung vor der Verschraubung von Schraubteil und Anschlussstück gemäß einer zweiten Variante im Längsschnitt;
Fig.7 zeigt die Teilansicht der Anschlussvorrichtung gemäß Figur 6 nach der Verschraubung von Schraubteil und Anschlussstück;
Fig.8 zeigt eine Anschlussvorrichtung vor der Verschraubung von Schraubteil und Anschlussstück gemäß einer dritten Variante, teilweise im Längsschnitt;
Fig.9 zeigt die Teilansicht der Anschlussvorrichtung gemäß Figur 8 nach der Verschraubung von Schraubteil und Anschlussstück;
Fig.10 zeigt eine Teilansicht einer Anschlussvorrichtung vor der Verschraubung von Schraubteil und Anschlussstück gemäß einer vierten Variante im Längsschnitt;
Fig.11 zeigt die Teilansicht der Anschlussvorrichtung gemäß Figur 10 nach der Verschraubung von Schraubteil und Anschlussstück.
Fig. 12 zeigt eine Teilansicht einer Anschlussvorrichtung vor der Verschraubung von Schraubteil und Anschlussstück gemäß einer fünften Variante im Längsschnitt; und
Fig.13 zeigt die Teilansicht der Anschlussvorrichtung gemäß Figur 12 nach der Verschraubung von Schraubteil und Anschlussstück.

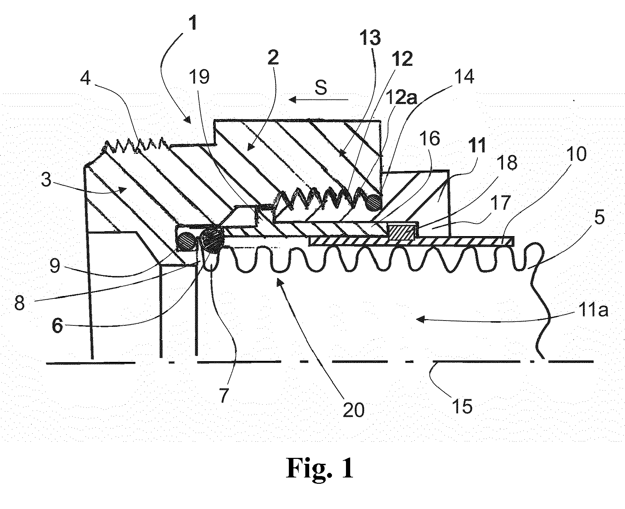

In Figur 1 ist ein Längsschnitt durch eine Anschlussvorrichtung 1 gezeigt, welche ein Anschlussstück 2 umfasst. Das Anschlussstück 2 weist im Endbereich 3 ein erstes Gewinde 4 auf, welches dazu ausgebildet ist, die Anschlussvorrichtung 1 mit einem nicht dargestellten weiteren (Leitungs-)Element zu verbinden. Das Anschlussstück 2 ist auf ein Ende eines ringgewellten Metallschlauchs 5 gesteckt. Hierzu weist das Anschlussstück 2 einen Haltering 6 auf, welcher in ein Wellental 7 des Metallschlauchs 5 eingreift und mit einem endständigen Wellenberg 8 am Ende des Metallschlauchs 5 zusammenwirkt, um ein Herausrutschen des Metallschlauchs 5 aus dem Anschlussstück 2 zu verhindern. Der Haltemechanismus des Anschlussstücks 2 auf dem Metallschlauch 5 ist dem Prinzip nach in der EP 1 347 227 B1 beschrieben. Auf eine detaillierte Beschreibung wird hier daher verzichtet.

Das Anschlussstück 2 weist weiterhin einen O-Ring 9 auf, welcher eine dichtende Wirkung hat und einen Austritt eines in dem Metallschlauch 5 geführten Fluides verhindern soll. Der Metallschlauch 5 ist in einem Teilbereich von einer Ummantelung 10 in Form einer Kunststoffschicht umgeben, die die Funktion eines Korrosionsschutzes für den Metallschlauch 5 erfüllt. Ein Anfangsbereich 13 des Anschlussstücks 2 weist ein Innengewinde 12 auf, über welches das Anschlussstück 2 mit dem Schraubteil 11 verbunden ist, welches Schraubteil 11 ein geeignet komplementär ausgebildetes Außengewinde 12a aufweist. Die lineare Bewegungsrichtung der Verschraubung ist mit dem Pfeil S gekennzeichnet. Im Inneren des Schraubteils 11 ist eine Durchtrittsöffnung 11a vorgesehen, durch welche der Metallschlauch 5 geführt ist. An einem dem Schraubteil 11 zugwandten Ende des Bereichs 13 befindet sich ein weiterer O-Ring 14, der zwischen Anschlussstück 2 und Schraubteil 11 angeordnet ist und ein Eindringen von potentiell korrosiven Medien in den Bereich 13 und ein schädliches Einwirken auf den Metallschlauch 5 verhindern soll.

Zwischen einem Bereich des Schraubteils 11, in welchem das Schraubteil 11 von dem Anschlussstück 2 umgeben ist, und dem Metallschlauch 5 ist ein Hülsenteil 16 angeordnet. Das Schraubteil 11 weist an seinem dem Anschlussstück 2 abgewandten Ende eine umlaufende Schulter 17 auf. Zwischen dieser Schulter 17, dem Hülsenteil 16 und der Ummantelung 10 des Metallschlauchs 5 ist ein (zumindest im entlasteten Zustand) im Querschnitt rechteckiges Dichtungselement 18 angeordnet. Das Dichtungselement 18 hat durch die Verschraubung des Schraubteils 11 mit dem Anschlussstück 2 durch Einwirkung der Schulter 17 eine axiale Anpressung gegen das Hülsenteil 16 und dadurch eine Vergrößerung seiner Ausdehnung in radialer Richtung hin zur Längsachse 15 der Anordnung erfahren. Um das Dichtungselement 18 vor einer übermäßigen axialen Anpressung zu schützen, weist auch das Hülsenteil 16 eine umlaufende Schulter 19 auf, welche einen Endanschlag für das Schraubteil 11 darstellt. Das Dichtungselement 18 ist durch seine radiale Verformung gegen die Ummantelung 10 des Metallschlauchs 5 gepresst, womit der in das Anschlussstück eingeführte Endbereich 20 des Metallschlauchs 5, welcher nicht von der Ummantelung 10 umhüllt ist, um mit dem Haltering 6 wechselwirken zu können, wie oben beschreiben, wirksam vor Korrosion geschützt ist. Dies erfolgt weitgehend unabhängig von der tatsächlichen radialen Ausdehnung der Ummantelung 10 bzw. diesbezüglichen Herstellungstoleranzen und erfordert keine nachträgliche Umwicklung der Anordnung mit einem Tape oder dergleichen..

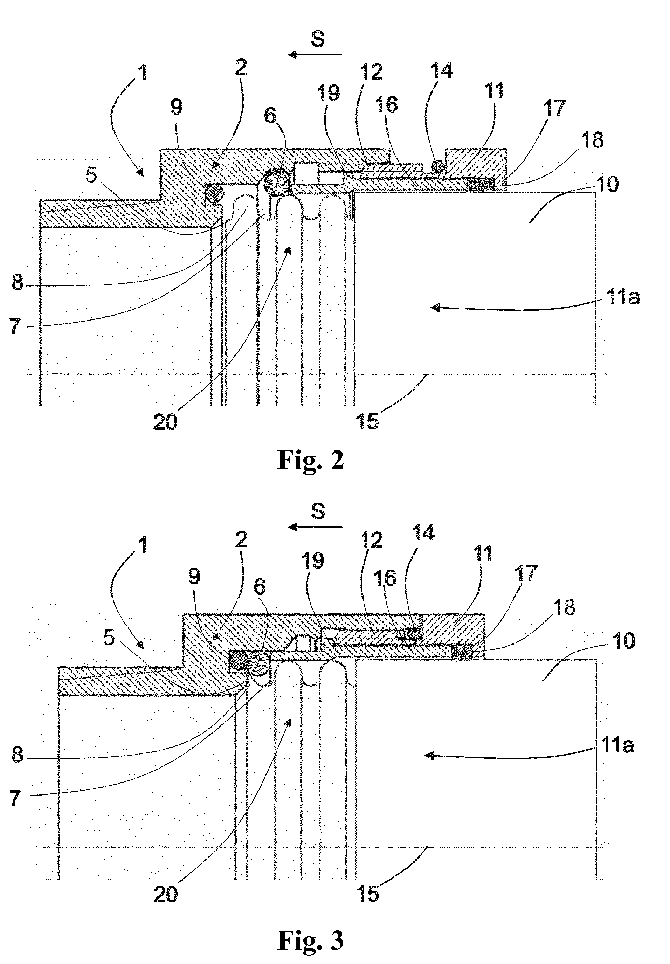

Die Figuren 2 und 3 zeigen die Anschlussvorrichtung aus Figur 1, teilweise im Längsschnitt, ohne den Endbereich 3 sowie das erste Gewinde 4.

In Figur 2 ist der Zustand vor dem Verschrauben des Schraubteils 11 mit dem Anschlussstück 2 gezeigt. Das Dichtungselement 18 befindet sich in seinem entspannten Zustand und steht noch nicht in Wirkverbindung mit der Ummantelung 10 des Metallschlauchs 5.

In Figur 3 ist der Zustand nach dem Verschrauben dargestellt. Das Schraubteil 11 ist gegen die Schulter 19 des Hülsenteils 16 in Anlage getreten, und die Schulter 17 des Schraubteils 11 bewirkt eine axiale Anpressung des Dichtungselementes 18 an das Hülsenteil 16. Das Dichtungselement 18 hat hierdurch eine Verformung erfahren, nämlich sich axial verkürzt und sich insbesondere quer zur Richtung der Längsachse 15, d.h. radial auf die Ummantelung 10 des Metallschlauchs 5 hin ausgedehnt. Dadurch bewirkt das Dichtungselement 18 in Verbindung mit der Ummantelung 10 eine Abdichtung des Endbereichs 20 des Metallschlauchs 5 gegen mögliche korrosive Einflüsse aus der Umgebung.

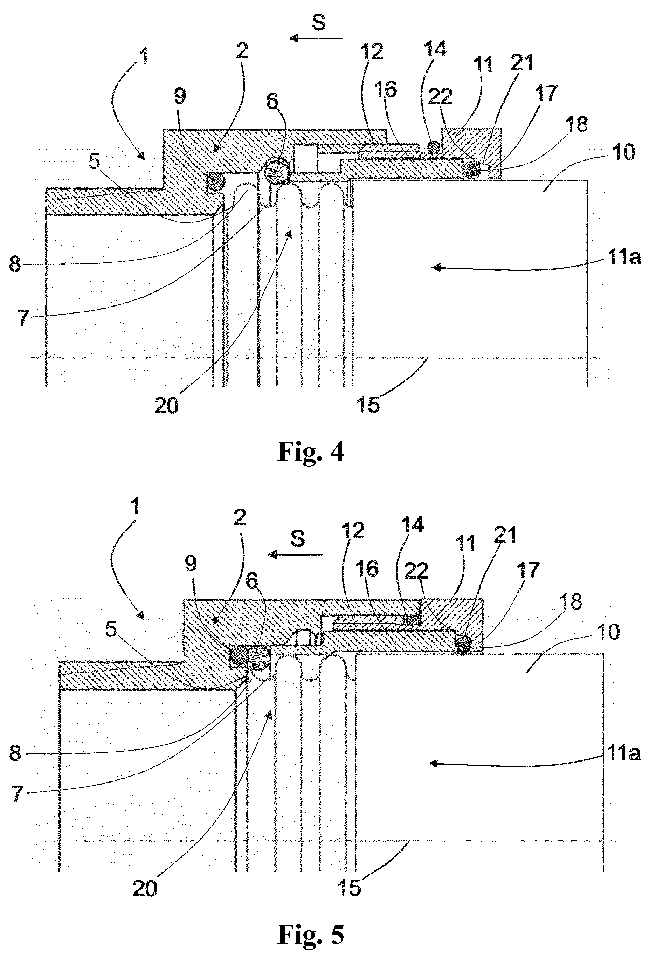

In Figur 4 ist eine erste Variante der Anschlussvorrichtung 1 aus den zuvor beschriebenen Figuren dargestellt. Im Gegensatz zu Figur 2 bzw. Figur 3 weist das Hülsenteil 16 hier keine Schulter als (optionale) Absicherung des Dichtungselements 18 gegen eine übermäßige axiale Verpressung auf. Analog zu Figur 2 ist in Figur 4 der Zustand vor dem Verschrauben des Schraubteils 11 mit dem Anschlussstück 2 gezeigt. Im Gegensatz zu Figur 2 weist das Schraubteil 11 im Bereich der Schulter 17 eine konische Form auf. Das Schraubteil 11 ist in diesem Bereich mit einer Schräge 21 versehen, welche entgegen der Richtung S radial nach innen auf den Metallschlauch 5 bzw. die Ummantelung 10 zuläuft. Weiterhin weist das Schraubteil eine weitere Schulter 22 auf, auf deren Funktion weiter unten eingegangen wird. Das Dichtungselement 18 ist hier als O-Ring ausgeführt und befindet sich gemäß Figur 4 in demjenigen Bereich der konischen Form, der den größten lichten Öffnungsquerschnitt aufweist.

In Figur 5 ist analog zu Figur 3 der Zustand nach dem Verschrauben gezeigt. Das Schraubteil 11 ist dadurch in Richtung S axial verlagert worden und stößt mit seiner Schulter 22 an das Hülsenteil 16, das entsprechend als Endanschlag wirkt. Das Dichtungselement 18 ist dadurch gezwungen, axial entgegen der Richtung S in einen Bereich kleineren lichten Öffnungsquerschnitts des Schraubteils 11 auszuweichen. Weiterhin ist das Dichtungselement 18 radial in Richtung auf den Metallschlauch 5 bzw. die Ummantelung 10 hin verformt worden. Die Wirkung ist dieselbe, wie sie anhand Figur 3 bereits erläutert worden ist.

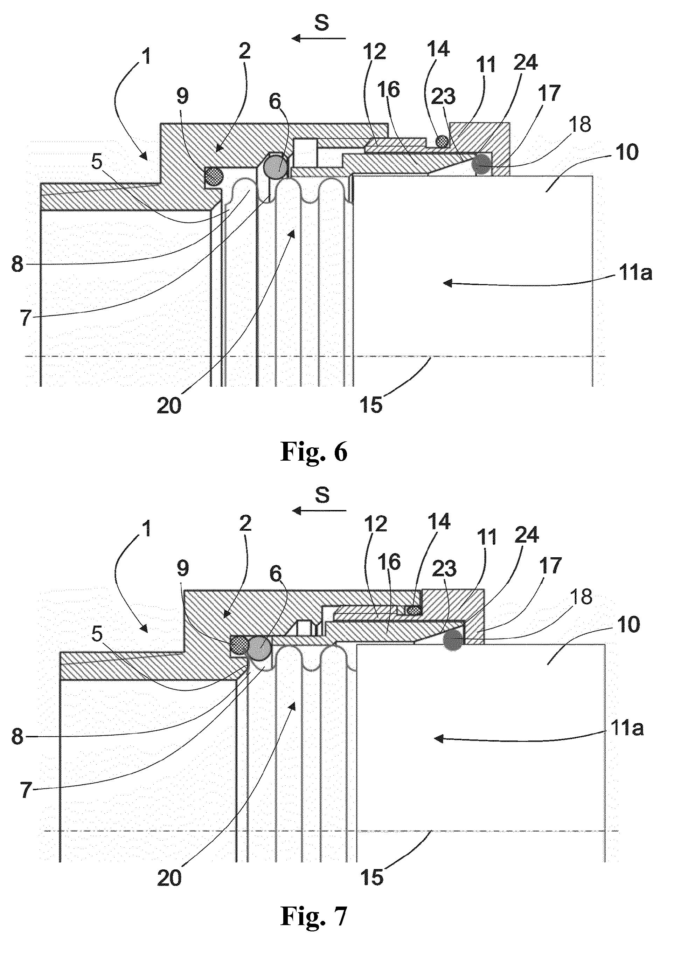

Figur 6 zeigt eine zweite Variante der erfindungsgemäßen Anschlussvorrichtung 1 analog zu den Figuren 2 und 4 im Zustand vor dem Verschrauben des Schraubteils 11 mit dem Anschlussstück 2. Hierbei weist im Gegensatz zu Figur 4 und Figur 5 nicht das Schraubteil 11 eine konische Form auf, sondern das Hülsenteil 16. Das Hülsenteil 16 weist eine Schräge 23, die in Richtung S auf den Metallschlauch 5 bzw. die Ummantelung 10 radial nach innen zuläuft, sowie eine Schulter 24 auf. Das Dichtungselement 18 ist hier wiederum als O-Ring ausgeführt und befindet sich in demjenigen Bereich der konischen Form, der den größten lichten Öffnungsquerschnitt aufweist

Figur 7 zeigt analog zu den Figuren 3 und 5 den Zustand nach dem Verschrauben. Das Schraubteil 11 stößt mit der Schulter 17 an die Schulter 24 des Hülsenteils 16, die als ein Endanschlag fungiert. Das Dichtungselement 18 wurde dadurch, wie in bereits anhand der Figuren 3 und 5 beschrieben, radial verformt und bildet eine dichtende Verbindung mit der Ummantelung 10.

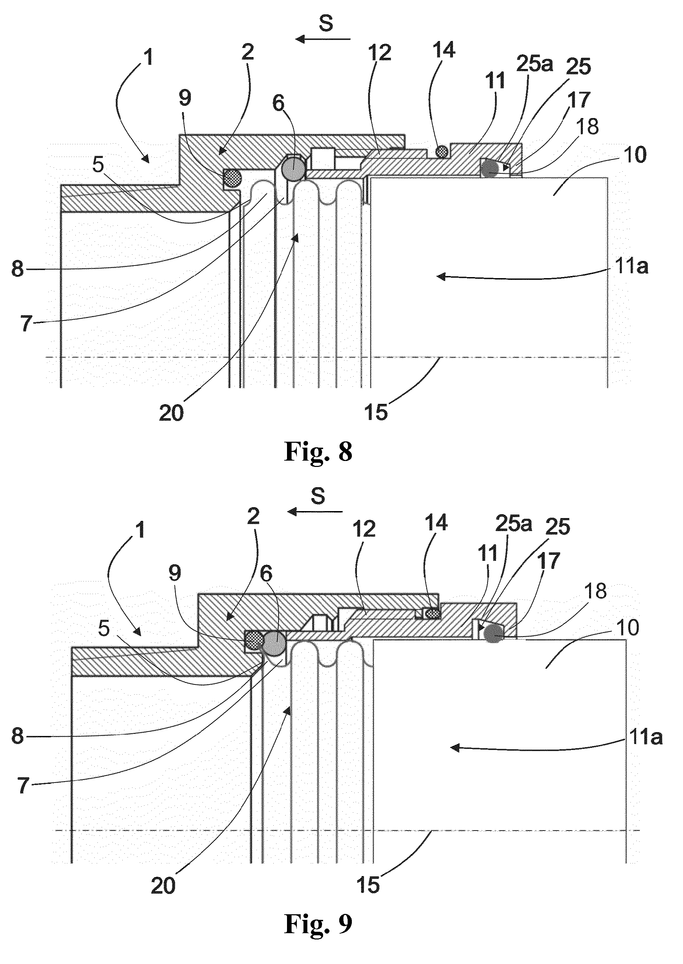

In Figur 8 ist eine dritte Variante der erfindungsgemäßen Anschlussvorrichtung 1 im Zustand vor dem Verschrauben des Schraubteils 11 mit dem Anschlussstück 2 dargestellt. Im Gegensatz zu den Figuren 1 bis 7 ist hierbei kein Hülsenteil 16 vorgesehen, welches axial gegen das Dichtungselement 18 gepresst wird. Vielmehr weist das Schraubteil 11 eine konusförmige Aussparung 25 auf, deren Schräge 25a entgegen der Richtung S der Verschraubung radial nach innen auf den Metallschlauch 5 bzw. die Ummantelung 10 zuläuft. Das Dichtungselement 18 ist wie zuvor beschrieben als O-Ring ausgeführt und befindet sich in demjenigen Bereich der konischen Form, der den größten lichten Öffnungsquerschnitt aufweist

Figur 9 zeigt die dritte Variante gemäß Figur 8 im Zustand nach dem Verschrauben. Das Dichtungselement 18 hat aufgrund des schrägen Verlaufs im Bereich der Schräge 25a der Aussparung 25 eine axiale Versetzung und eine radiale Verformung nach innen erfahren und bildet dadurch, wie zuvor beschrieben, eine dichtende Verbindung mit der Ummantelung 10. Ursächlich für die Versetzung des Dichtungselements 18 sind im Wesentlichen (Haft-)Reibungskräfte, die während der axialen Bewegung des Schraubteils 11 in Richtung S zwischen dem Dichtungselement 18 und der Ummantelung 10 auftreten und dahingehend wirken, dass die relative Lage des Dichtungselements 18 und der Ummantelung 10 zueinander in etwa konstant bleibt.

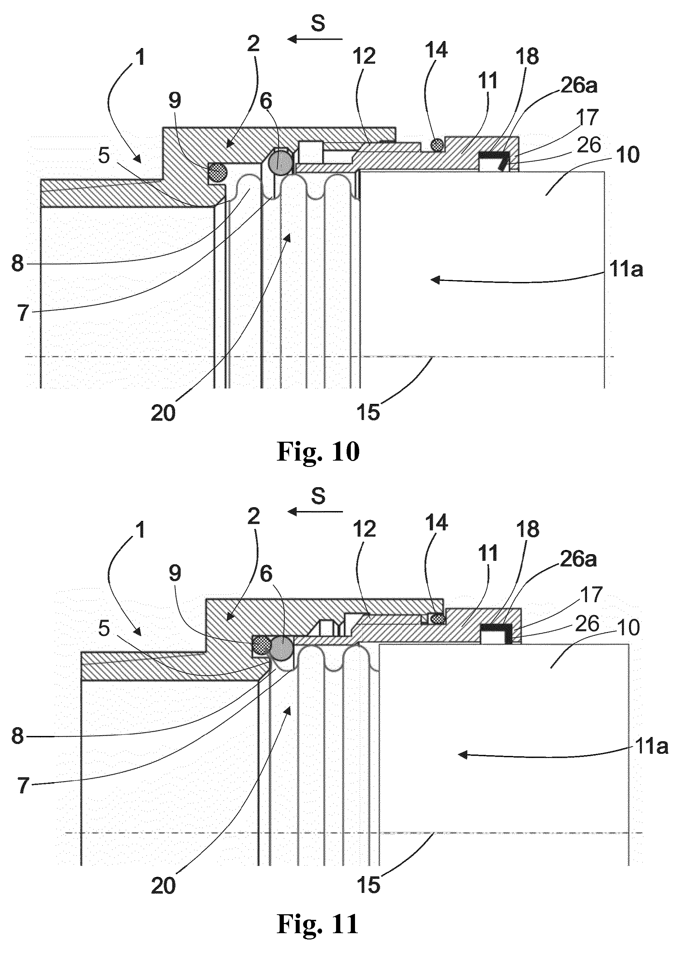

In Figur 10 ist eine vierte Variante der erfindungsgemäßen Anschlussvorrichtung 1 im Zustand vor dem Verschrauben des Schraubteils 11 mit dem Anschlussstück 2 dargestellt. Der Unterschied zu Figur 8 ergibt sich aus der Ausgestaltung des Dichtungselements 18. Dieses weist vor dem Verschrauben eine dem Buchstaben L ähnliche Form auf, wobei ein - ohne Beschränkung - kürzerer Teil oder Schenkel 26 des Dichtungselements 18, der sich in den Bereich der Durchtrittsöffnung 11a hinein erstreckt und deshalb mit der Ummantelung 10 des Metallschlauchs 5 in Berührung kommt, in Richtung S gegen die radiale Achse geneigt ist, während der längere Teil oder Schenkel 26a in etwa parallel zur Längsachse 15, beabstandet von dem Metallschlauch 5, an dem Schraubteil 11 anliegt.

Figur 11 zeigt den Zustand der Anschlussvorrichtung 1 aus Figur 10 nach dem Verschrauben. Aufgrund der (Haft-)Reibung zwischen dem kürzeren Teil 26 des Dichtungselements 18 und der Ummantelung 10 ist der kürzere Teil 26 des Dichtungselements 18 in eine etwa radiale Ausrichtung gekippt oder verschwenkt worden und bewirkt somit eine wirksam dichtende Verbindung mit der Ummantelung 10. Der kürzere Teil 26 wird durch die Schulter 17 in dessen in etwa radialer Ausrichtung gestützt und erreicht dadurch seine maximale Dichtwirkung.

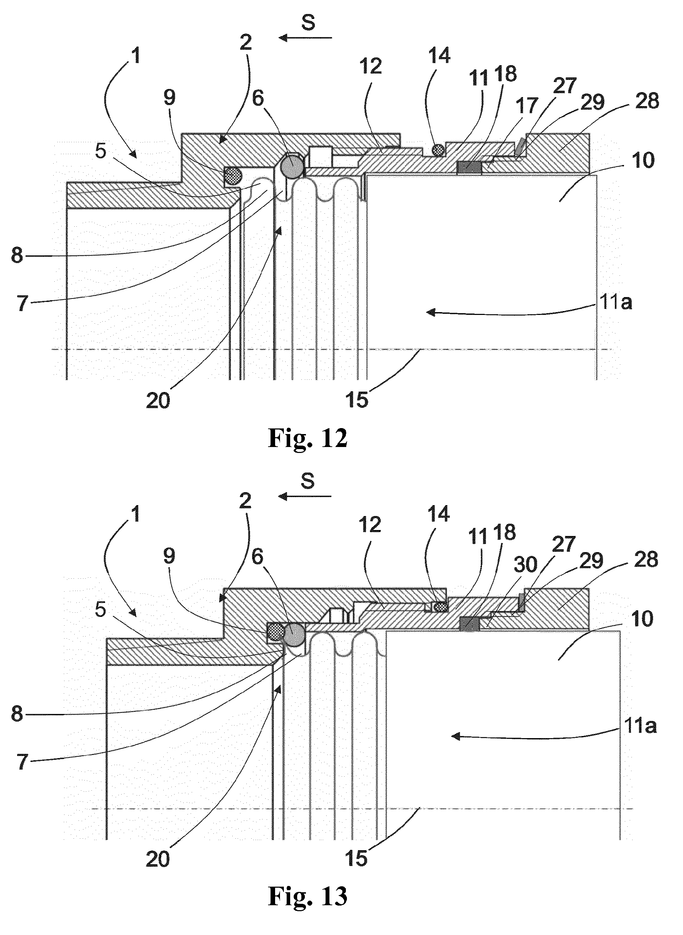

In Figur 12 ist eine fünfte Variante der erfindungsgemäßen Anschlussvorrichtung 1 gezeigt. Das Schraubteil 11 umfasst im Gegensatz zu den zuvor erläuterten Varianten zusätzlich noch ein weiteres Schraubteil 28, welches über ein Gewinde 29 mit dem Schraubteil 11 verbindbar ist und eine Schulter 30 aufweist, auf deren Funktion weiter unten eingegangen wird. Zwischen dem weiteren Schraubteil 28 und dem Schraubteil 11 ist ein Kraftübertragungselement 27 in Form eines relativ steifen Federrings angeordnet. Beim Verschrauben des weiteren Schraubteils 28 mit dem Schraubteil 11 wird dadurch vorzugsweise zunächst das Schraubteil 11 mit dem Anschlussstück 2 verschraubt, da weniger Kraft aufgebracht werden muss, um den Halterring 6 in die vorgesehen Lage, wie sie in Figur 13 dargestellt ist, zu bringen und den Wellenberg 8 des Metallschlauchs 5, wie in EP 1 347 227 B1 beschrieben, zu verformen, als für eine axiale Stauchung oder Kompression des Kraftübertragungselements 27. Ist das Schraubteil 11 in der vorgesehenen Endposition relativ zum Anschlussstück 2 angelangt, so beginnt der Vorgang des Verschraubens von Schraubteil 11 mit dem weiteren Schraubteil 28 unter gleichzeitiger Verformung des Kraftübertragungselements 27.

Der Endzustand nach dem Verschrauben ist - wie bereits erwähnt - in Figur 13 dargestellt. Das weitere Schraubteil 28 hat mit seiner Schulter 30 das Dichtungselement 18 axial gegen das Schraubteil 11 gepresst, wodurch das Dichtungselement 18, analog zur Darstellung in Figur 3, radial in Richtung des Metallschlauchs 5 bzw. der Ummantelung 10 ausgewichen ist und nun in dichtender Wirkverbindung mit der Ummantelung 10 steht.

## Patentansprüche

1. Anschlussvorrichtung (1) für eine fluidführende Leitung mit einem ringgewellten Metallschlauch (5), umfassend:
ein auf ein Ende des Metallschlauchs (5) aufsetzbares Anschlussstück (2);
ein Schraubteil (11), welches eine Durchtrittsöffnung (11a) für den Metallschlauch (5) aufweist und mit dem Anschlussstück (2) verschraubbar ist, um wenigstens einen endständigen Wellenberg (8) des Metallschlauchs (5) gegen das Anschlussstück (2) dichtend zu verformen; und
ein umlaufendes Dichtungselement (18), das zwischen dem Schraubteil (11) und dem Metallschlauch (5) angeordnet ist,
**dadurch gekennzeichnet, dass**
durch das Verschrauben des Anschlussstücks (2) und des Schraubteils (11) auf das Dichtungselement (18) einwirkbar ist, sodass eine Verformung des Dichtungselements (18) in radialer Richtung hin zu dem oder gegen den Metallschlauch (5) bewirkbar ist.

2. Anschlussvorrichtung (1) nach Anspruch 1, **dadurch gekennzeichnet, dass** der Metallschlauch (5) wenigstens in Teilbereichen mit einer Ummantelung (10) versehen ist, vorzugsweise in Form einer Kunststoffschicht, und dass höchst vorzugsweise das Dichtungselement (18) im Bereich der Ummantelung (10) angeordnet oder anzuordnen ist.

3. Anschlussvorrichtung (1) nach einem der vorangegangenen Ansprüche, **dadurch gekennzeichnet, dass** das Dichtungselement (18) als O-Ring oder als im Querschnitt vorzugsweise rechteckiger Dichtring oder als im Querschnitt etwa L- oder U-förmiger Dichtring ausgebildet ist, höchst vorzugsweise in einem Kunststoff, insbesondere in einem Elastomer.

4. Anschlussvorrichtung (1) nach einem der vorangegangenen Ansprüche, **dadurch gekennzeichnet, dass** das Anschlussstück (2) das Schraubteil (11) nach dem Verschrauben wenigstens in Teilbereichen umgibt oder von diesem umgeben ist.

5. Anschlussvorrichtung (1) nach einem der Ansprüche 1 bis 4, **dadurch gekennzeichnet, dass** zwischen Anschlussstück (2) und Schraubteil (11) ein zusätzliches Hülsenteil (16) vorgesehen ist, welches Hülsenteil (16) zum Einwirken auf das Dichtungselement (18) beim Verschrauben von Anschlussstück (2) und Schraubteil (11) vorgesehen und ausgebildet ist.

6. Anschlussvorrichtung (1) nach einem der Ansprüche 1 bis 5, **dadurch gekennzeichnet, dass** beim Verschrauben durch das Schraubteil (11), vorzugsweise durch eine an dem Schraubteil (11) vorgesehene Schulter (17), eine Kraft in axialer Richtung auf das Dichtungselement (18) bewirkbar ist, höchst vorzugsweise gegen das Hülsenteil (16) gemäß Anspruch 5.

7. Anschlussvorrichtung (1) nach Anspruch 5 oder 6, **dadurch gekennzeichnet, dass** das Hülsenteil (16) an seinem dem Schraubteil (11) zugewandten Ende (24) eine von dem Ende (24) in Richtung (S) des Anschlussstücks (2) radial nach innen zulaufende Schräge (23) aufweist.

8. Anschlussvorrichtung (1) nach einem der Ansprüche 1 bis 6, **dadurch gekennzeichnet, dass** das Schraubteil (11) eine entgegen der Richtung (S) radial nach innen zulaufende Schräge (21; 25) aufweist, vorzugsweise im Bereich der Schulter (17).

9. Anschlussvorrichtung (1) nach Anspruch 5, **dadurch gekennzeichnet, dass** das Schraubteil (11) wenigstens ein weiteres Schraubteil (28) umfasst, das mit dem Schraubteil (11) verschraubbar ist, und dass beim Verschrauben von Schraubteil (11) und weiterem Schraubteil (28) durch das weitere Schraubteil (28) eine axiale Kraft auf das Dichtungselement (18) bewirkbar ist.

10. Anschlussvorrichtung (1) nach Anspruch 9, **dadurch gekennzeichnet, dass** zwischen dem Schraubteil (11) und dem weiteren Schraubteil (28) ein Kraftübertragungselement (27) angeordnet ist, vorzugsweise ein federelastisches Element, höchst vorzugsweise ein Federring, welches Kraftübertragungselement (27) dazu ausgebildet und vorgesehen ist, beim Verschrauben von Schraubteil (11) und weiterem Schraubteil (28) eine Beeinflussung, insbesondere Verzögerung der Krafteinwirkung auf das Dichtungselement (18) zu bewirken.

11. Anschlussvorrichtung (1) nach einem der Ansprüche 1 bis 10, **dadurch gekennzeichnet, dass** zwischen dem Schraubteil (11) und dem Anschlussstück (2) ein weiteres umlaufendes Dichtungselement (14) angeordnet ist, vorzugsweise ein O-Ring.

12. Anschlussverbindung, umfassend eine Anschlussvorrichtung (1) und einen mit der Anschlussvorrichtung (1) verbundenen ringgewellten Metallschlauch (5),
**dadurch gekennzeichnet, dass**
die Anschlussvorrichtung (1) nach einem der vorangegangenen Ansprüche ausgebildet ist.

13. Anschlussverbindung nach Anspruch 12, **dadurch gekennzeichnet, dass** der Metallschlauch (5) wenigstens in Teilbereichen mit einer Ummantelung (10) versehen ist, vorzugsweise in Form einer Kunststoffschicht.

14. Anschlussverbindung nach Anspruch 13, **dadurch gekennzeichnet, dass** die Ummantelung (10) in dichtender Wirkverbindung mit dem Dichtungselement (18) steht.

15. Verfahren zum dichten Verbinden eines ringgewellten Metallschlauchs (5) mit einer gemäß einem der Ansprüche 1 bis 11 ausgebildeten Anschlussvorrichtung (1), beinhaltend, dass auf ein Ende des Metallschlauchs (5) das Anschlussstück (2) aufgesetzt wird; dass der Metallschlauch (5) durch die Durchtrittsöffnung (11a) in dem Schraubteil (11) gesteckt wird; dass ein Verschrauben des Anschlussstücks (2) und des Schraubteils (11) erfolgt, wobei eine Verformung wenigstens eines vorzugsweise endständigen Wellenberges (8) des Metallschlauchs (5) erfolgt; und wobei ein Einwirken auf das Dichtungselement (18) erfolgt und das Dichtungselement (18) in radialer Richtung in Anlage an den Metallschlauch (5) oder eine Ummantelung (10) desselben gebracht wird.
